(19) Europäisches Patentamt
European Patent Office
Office européen des brevets

(11) Veröffentlichungsnummer: **0 002 174**
**A1**

## (12) EUROPÄISCHE PATENTANMELDUNG

(21) Anmeldenummer: 78100869.3

(22) Anmeldetag: 12.09.78

(51) Int. Cl.²: **B 29 D 9/08**
**B 29 D 23/00**

(30) Priorität: 29.11.77 DE 2753103

(43) Veröffentlichungstag der Anmeldung:
13.06.79 Patentblatt 79/12

(84) Benannte Vertragsstaaten:
CH FR GB NL SE

(71) Anmelder: Röhm Gm.
Kirschenallee
D-6100 Darmstadt(DE)

(72) Erfinder: Vetter, Heinz, Dr.
Taunusstrasse 92
D-6101 Roßdorf/ Darmst.(DE)

(72) Erfinder: Wenzel, Franz, Dr.
Zeyherweg 5
D-6100 Darmstadt(DE)

(54) Verfahren und Vorrichtung zur Herstellung eines folienbeschichteten Hohlprofilstranges aus Kunststoff.

(57) Durch Extrusion von Kunststoff im thermoplastischen Zustand wird ein Hohlprofilstrang (8) erzeugt und nach dem Austritt aus der Extrusionsdüse (1) mit einer Folie (7) in Berührung gebracht und zusammen mit dieser in einen Formkanal (2) eingezogen, wobei vorzugsweise ein flüssiges Gleitmittel über eine Schmiernut (13) zwischen die Folie (7) und die Innenwandung des Formkanals eingebracht wird. Die Eintrittslippen (9) des Formkanals (2) sind von der Düse (1) durch einen engen Durchtrittspalt (6) für die Folie getrennt. In dem Formkanal wird der mit der Folie bedeckte Hohlprofilstrang durch erhöhten Gasdruck in seinen Hohlkammern oder durch einen Unterdruck im Formkanal an dessen Innenwandung angedrückt und bis unter die Erweichungstemperatur abgekühlt.

EP 0 002 174 A1

Croydon Printing Company Ltd.

Fig. 1

Verfahren und Vorrichtung zur Herstellung eines
folienbeschichteten Hohlprofilstranges aus
Kunststoff

Die Erfindung betrifft die Herstellung von extrudiertem Hohlprofilstrangmaterial aus Kunststoff mit einer ein- oder beidseitigen Folienbeschichtung. Die Folienbeschichtung kann entweder als dauerhafter Bestandteil des Strangmaterials der Eigenschaftsverbesserung oder Anpassung an bestimmte Verwendungen dienen, oder sie kann einen vorübergehenden Schutz des Materials bei Lagerung, Transport und Verarbeitung bieten. In diesem Fall darf die Haftfestigkeit zwischen dem Strangmaterial und der Folie nicht unbegrenzt hoch sein.

Die Herstellung folienbeschichteter Kunststoffstränge durch gleichzeitige Extrusion des Strangmaterials und der Folie und ihre Vereinigung innerhalb der Extrusionsdüse ist aus zahlreichen Druckschriften bekannt, beispielsweise aus der DT-OS 23 37 677. Der maschinelle Aufwand für dieses Verfahren ist erheblich; man benötigt zwei Extruder, die an eine Mehrstoffdüse angeschlossen sind und deren Arbeitsweise genauestens aufeinander abgestimmt sein muß.

- 2 -

In der DT-OS 19 48 442 wird eingangs ein Verfahren beschrieben, bei dem man auf einen extrudierten Kunststoffstrang unmittelbar nach dem Verlassen der Breitschlitzdüse eine fertig vorbereitete Folie aufwalzt. Das Verfahren läßt sich jedoch bei der Herstellung von Hohlprofilsträngen nicht anwenden, weil diese im heißen Zustand durch den Walzendruck zusammengedrückt würden. Wenn man die Folie erst aufwalzt, wenn der Hohlstrang durch eine Kalibriervorrichtung gelaufen und abgekühlt ist, so hat er meistens schon Oberflächenschäden erlitten. Außerdem haften an dem erkalteten Strang nur mit Haftklebern beschichtete Folien, die verhältnismäßig teuer sind.

Aus der DT-OS 26 05 466 ist es bekannt, einen extrudierten Hohlprofilstrang aus Kunststoff dadurch mit einer Folie zu beschichten, daß man auf eine ebene Fläche eines gegen Widerlager des Extrudermundstückes anliegenden Wandteiles des Hohlprofilstranges eine Folie aufbringt und den mit der Folie beschichteten Strang in noch plastischem Zustand durch einen Formkanal führt. Dieses Verfahren ist nicht durchführbar, wenn der thermoplastische Hohlprofilstrang unter dem Druck, mit dem die Folie "aufgebügelt" wird, an dem Widerlager haftet. Eine solche Haftung ist jedoch die Regel. Bedingungen, unter denen sie vermieden werden kann, sind nicht offenbart und mit dem Wissen des Extrusionsfachmannes nicht auffindbar.

Die Aufgabe der Erfindung besteht darin, unter Vermeidung der geschilderten Nachteile einen extrudierten

Hohlprofilstrang aus Kunststoff mit einer vorfabrizierten Folie derart zu beschichten, daß die Folie fest an dem Strang haftet. Die Haftung wird in diesem Sinne als fest angesehen, wenn der beschichtete Strang mittels Vakuum angesaugt werden kann, ohne daß sich die Folie löst.

Alle bekannten Verfahren zur Herstellung folienbeschichteter Kunststoffstränge gehen von der offenbar als selbstverständlich angenommenen Notwendigkeit aus, das Folienmaterial und das Strangmaterial unter hohem mechanischem Druck zu vereinigen. Die Erfindung beruht auf der überraschenden Erkenntnis, daß es nur eines vergleichsweise geringen Druckes bedarf, um den thermoplastischen Kunststoffstrang fest mit einer Folie zu verbinden und daß der Druck, mit dem ein Hohlstrang üblicherweise beim Durchgang durch einen Formkanal an dessen Innenwandung angedrückt wird, für diesen Zweck ausreicht. Dadurch werden zusätzliche Apparaturen zum Aufbringen der Folie überflüssig.

Die Erfindung gestattet es, einen Hohlprofilstrang auf einfache Weise mit geringem apparativem Aufwand mit Folien von nahezu beliebiger Art, insbesondere auch mit billigen unbeschichteten Folien zu überziehen. Dabei werden gleichzeitig Oberflächenfehler, wie sie häufig beim Durchgang eines thermoplastischen Kunststoffstranges durch einen Formkanal auftreten, grundsätzlich ausgeschlossen.

Der Kunststoffstrang ist vorzugsweise wenigstens auf der zu beschichtenden Seite eben. Kunststoffstränge mit leicht gewelltem Profil lassen sich erfindungsgemäß beschichten, wenn man eine elastische Folie,
z.B. aus Polyäthylen, verwendet. Die Erfindung eignet
sich bevorzugt zur Herstellung von folienbeschichtetem
Hohlprofilstrangmaterial, das aus zwei ebenen Außenflächen und dazwischen angeordneten Stegen aufgebaut
ist.

Es können alle Kunststoffe verarbeitet werden, die
sich zur Extrusion zu einem derartigen Strangmaterial
eignen, beispielsweise Polymethylmethacrylat, Polyvinylchlorid, Polyäthylen, schlagfestes Polystyrol
oder Polycarbonat.

Die zur Beschichtung verwendete Folie besteht vorzugsweise ebenfalls aus Kunststoff, wobei grundsätzlich die gleichen Materialien in Betracht kommen
wie für das Strangmaterial, außerdem auch z.B. regenerierte Cellulose, Celluloseester, Polyamide oder
Polyester. Das Strang- und das Folienmaterial können
aus dem gleichen oder aus verschiedenem Kunststoffmaterial bestehen und sich beispielsweise in der
Färbung oder Pigmentierung, im Gehalt an flammhemmenden Zusätzen, im Molekulargewicht, in der
Zähigkeit oder in anderen anwendungstechnisch bedeutsamen Eigenschaften unterscheiden. Anstelle von
Kunststoffolien können auch Metallfolien, Papier oder
ähnliche folienartige Werkstoffe aufgebracht werden.
Allgemein werden unter Folien im Sinne der vorliegenden
Erfindung bahnförmige, ebene, elastische Werkstoffe
mit einer Dicke zwischen 5 und 500 µm verstanden. Im
Gegensatz zu dem bekannten Verfahren der Koextrusion
von Strang und Folie aus einer Mehrstoffdüse lassen sich erfindungsgemäß auch besonders vorbehandelte Folien verarbeiten; z.B. unterseitig bedruckte Folien oder koronabehandelte Polyolefinfolien.

Zu dem Zeitpunkt, in dem die Folie auf den Kunststoffstrang aufgelegt wird, muß sie sich in einem nicht-plastischen Zustand befinden. Diese Voraussetzung ist für Papier- oder Metallfolien unter den in Betracht kommenden Verarbeitungstemperaturen ohne weiteres gegeben. Kunststoffolien können dagegen eine Schmelztemperatur haben, die unterhalb der Temperatur des Kunststoffstranges liegt. In diesem Fall genügt es, daß sich mindestens eine Oberfläche der Folie bis zur Berührung mit dem Kunststoffstrang unterhalb ihrer Schmelztemperatur befindet. Unter der Schmelztemperatur wird in diesem Falle die Temperatur des Eintritts in den thermoplastischen Zustandsbereich verstanden.

Der Anpreßdruck läßt sich bei der Herstellung der Hohlprofilstränge wahlweise durch äußeren Unterdruck oder durch einen erhöhten Gasdruck im Innern der Hohlkammern erzeugen. Der Gasdruck kann in an sich bekannter Weise dadurch aufrechterhalten werden, daß man das freie Ende des extrudierten Stranges mittels Gleitstopfen oder auf andere Weise verschließt und über eine durch den Düsenkern führende Leitung Druckgas in die Hohlkammer leitet. Bei der Arbeitsweise mit Unterdruck wird als Formkanal eine sogenannte Vakuum-Kalibriervorrichtung verwendet, die an der Innenwandung mit Rillen oder Perforierungen versehen ist, die unter teilweisem oder vollem Vakuum stehen, während in den Hohlkammern der atmosphärische Luftdruck den erforderlichen Anpreßdruck erzeugt. Die Haftfestigkeit zwischen dem Strang- und dem Folienmaterial wird stärker von der Affinität der Werkstoffe als von der Höhe des Anpreßdruckes bestimmt, sofern dieser überhaupt ausreicht, die Verbindung der Folie mit dem Kunststoffband zu bewirken. Es ist daher nicht zweckmäßig, den Anpreßdruck über 5 bis 10 bar zu steigern, zumal mit steigendem Druck auch der Gleitwiderstand zunimmt. Man bleibt im allgemeinen weit unter dem genannten Druck. In der Regel genügt ein Druck (bzw. ein Unterdruck in dem Formkanal) von 0,01 bis 0,5 bar, vorzugsweise 0,03 bis 0,3 bar.

Die Haftfestigkeit ist selbst bei geringer Affinität, wie beispielsweise zwischen Polymethylmethacrylat und koronabehandeltem Polyäthylen so hoch, daß sich die Folie bei der Vakuumkalibrierung oder bei der Verarbeitung des beschichteten Stranges, beispielsweise durch Tiefziehen im thermoplastischen Zustand, nicht ablöst. Sie kann jedoch gewünschtenfalls von der Strangoberfläche abgezogen werden. Bei Werkstoffen hoher Affinität, etwa zwischen Polymethylmethacrylat und Polycarbonat, ist eine spätere Ablösung der Schicht nicht möglich.

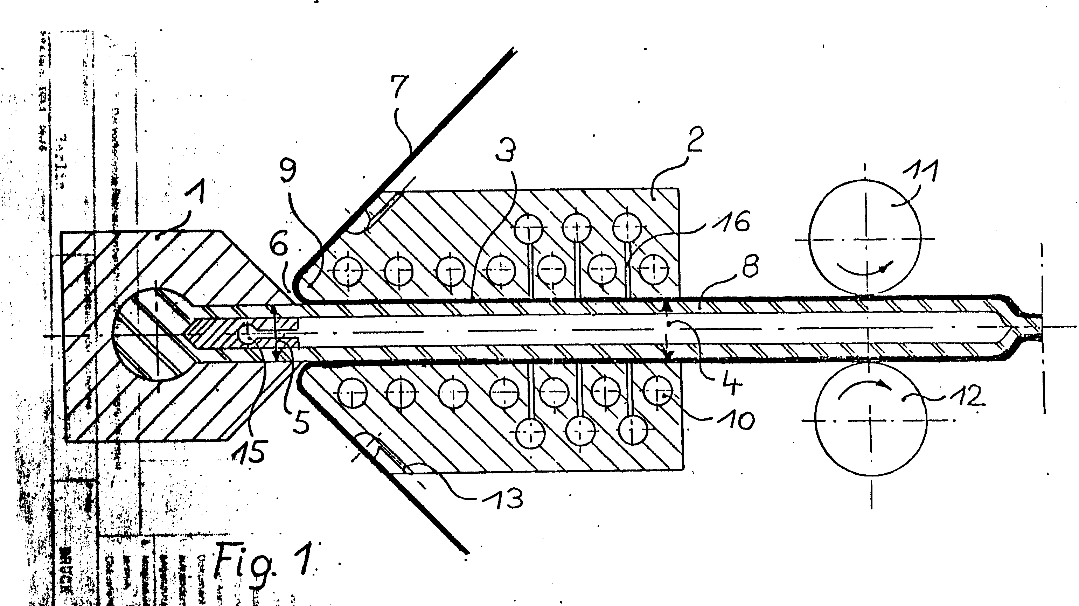

Eine zweckmäßige Ausgestaltung der erfindungsgemäß verwendeten Vorrichtung ist in Figur 1 im Längsschnitt dargestellt. Die Vorrichtung dient zur Erzeugung eines beidseitig folienbeschichteten Hohlkammerprofils, wobei wahlweise die Hohlkammer unter Gasdruck steht oder der Strang durch Vakuum an die Gleitflächen angedrückt werden kann. Der Hohlprofil- strang (8) wird in der Düse (1) erzeugt. Zwischen der Düse (1) und dem Formkanal (2) tritt die Folie (7) durch den Spalt (6) auf die Oberfläche des Stranges (8). Der Spalt (6) braucht nur so weit zu sein, daß die Folie gerade hindurchtreten kann, d.h. in der Größenordnung von 1 mm. Je enger der Spalt ist, um so geringer ist die Neigung der thermoplastischen Formmasse, in ihn einzudringen. Er darf nur so breit sein, daß die Schmelzen-Schleppströmung durch die in den Spalt eintretende Folie die von dem Formmassendruck erzeugte Leckströmung überwiegt. Das ist bei Spaltweiten unter 5 mm im allgemeinen der Fall.

Die lichte Weite (4) des Formkanals stimmt mit der Schlitzweite (5) der Extrusionsdüse etwa überein. Eine genaue Übereinstimmung dieser beiden Weiten ist im allgemeinen nicht erforderlich, da der austretende Strang (8) beim Eintritt in den Formkanal (2) durch eine etwas veränderte Strömungsgeschwindigkeit geringfügig aufgeweitet oder eingeschnürt werden kann. Die Eintrittslippen (9) des Formkanals (2) sind vorzugsweise leicht gerundet, damit die Folie leicht eingezogen werden kann. Die Innenwandungen (3) des Formkanals sind - wenigstens im hinteren Bereich - mit Kühlvorrichtungen (10) versehen, sodaß der Strang auf seinem Weg durch den Formkanal unter die Erweichungstemperatur abgekühlt wird. Der erkaltete Strang kann durch ein Walzenpaar (11, 12) aus dem Formkanal abgezogen werden. Um die Reibung zwischen dem beschichteten Strang und den Innenwandungen (3) herabzusetzen, kann über eine Schmiernut (13) ein flüssiges Gleitmittel z.B. Wasser, Glycerin, Öl oder eine wäßrige

- 8 -

Polymerisatlösung auf die Folienoberfläche aufgebracht werden. Das kann vor oder nach dem Aufbringen der Folie auf den Strang geschehen.

Wird der Anpreßdruck durch ein Druckgas erzeugt, so kann dieses über die Leitung (15) in die Hohlkammer geleitet werden. Vorzugsweise arbeitet man jedoch mit einem Vakuumformkanal, der in der Innenwandung (3) Öffnungen (16) enthält, über die das Vakuum auf den Strang einwirkt.

Patentansprüche

1. Verfahren zur Herstellung eines folienbeschichteten Hohlprofilstranges aus Kunststoff durch Extrusion des Kunststoffes im thermoplastischen Zustand, Aufbringen einer Folie auf den thermoplastischen Strang nach dem Austritt aus dem Extruder und Durchleiten des mit der Folie beschichteten Stranges durch einen Formkanal, worin der Hohlstrang durch erhöhten Gasdruck in den Hohlkammern oder durch einen Unterdruck im Formkanal an dessen Innenwandung angedrückt und bis unter die Erweichungstemperatur abgekühlt wird,

dadurch gekennzeichnet,

daß die Folie am Eingang des Formkanals mit dem Hohlstrang in Berührung gebracht und zusammen mit diesem in den Formkanal eingezogen wird.

2. Verfahren nach Anspruch 1, dadurch gekennzeichnet, daß der Gasdruck bzw. der Unterdruck 0,01 bis 0,5 bar, vorzugsweise 0,03 bis 0,3 bar, beträgt.

3. Verfahren nach Anspruch 1 und 2, dadurch gekennzeichnet, daß ein flüssiges Gleitmittel zwischen die Folie und die Innenwandung des Formkanals eingebracht wird.

4. Vorrichtung zur Durchführung des Verfahrens gemäß den Ansprüchen 1 bis 3, bestehend aus einer Extrusionsanlage, die mit einer Extrusionsdüse (1) und einem Formkanal (2) ausgerüstet ist, dadurch

0002174

- 10 -

gekennzeichnet, daß sich zwischen der Düse (1)
und dem Eingang des Formkanals (2) ein enger
Durchtrittsspalt (6) für die aufzubringende
Folie befindet.

5. Vorrichtung gemäß Anspruch 4, dadurch gekennzeichnet, daß der Durchtrittsspalt (6) weniger
als 5 mm breit ist.

Fig. 1

| | Europäisches Patentamt | EUROPÄISCHER RECHERCHENBERICHT | Nummer der Anmeldung EP 78 100 869.3 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 312 541 (FOURNIER) <br> * Anspruch 1; Fig. 1 * <br> -- | 1 |
| | US - A - 2 512 844 (D.J. WEBER) <br> * Spalte 1, Zeile 50 bis Spalte 2, Zeile 12; Spalte 10, Zeilen 30 bis 54; Fig. 3 * <br> -- | 3 |
| A | DE - B - 1 162 067 (FRIESEKE UND HOEPFNER) <br> * Spalte 2, Zeilen 23 bis 30 * <br> -- | |
| A | DE - B - 1 193 666 (DEUTSCHE TAFEL-GLAS) <br> * Spalte 2, Zeilen 27 bis 48; Spalte 5, Zeilen 7 bis 47, Fig. 1 * <br> -- | |
| A | US - A - 2 597 553 (D.J. WEBER) <br> * Spalte 4, Zeile 37 bis Spalte 6, Zeile 3; Fig. 3 und 4 * | |

**KLASSIFIKATION DER ANMELDUNG (Int. Cl.²)**

B 29 D 9/08
B 29 D 23/00

**RECHERCHIERTE SACHGEBIETE (Int. Cl.²)**

B 29 C 27/28
B 29 D 9/00
B 29 D 9/08
B 29 D 23/00
B 29 D 23/04
B 29 D 27/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 28-02-1979 | BRUCE |

EPA form 1503.1 06.78

Europäisches
Patentamt

EUROPÄISCHER RECHERCHENBERICHT

Nummer der Anmeldung

EP 78 100 869.3
- Seite 2 -

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| D | DE - A - 2 337 672 (BELLAPLAST) <br> * ganzes Dokument * <br> ... | | |
| D | DE - A - 2 605 466 (PLASTIC + FORM) <br> * ganzes Dokument * <br> ---- | | RECHERCHIERTE SACHGEBIETE (Int. Cl.³) |